# EUROPEAN PATENT SPECIFICATION

(11) **EP 0 868 621 B1**
(45) Date of publication and mention of the grant of the patent: **06.03.2002**
(21) Application number: 97944020.3
(22) Date of filing: 07.10.1997
(51) Int. Cl.: F16L 1/20

(54) **REEL TO REEL TRANSFER OF PIPE AND LARGE DIAMETER TUBING**
ÜBERFÜHRUNG VON ROHREN MIT GROSSEM DURCHMESSER VON EINER ROLLE AUF EINE ANDERE
TRANSFERT DE TUYAUX ET DE TUBES DE GROS DIAMETRE D'UN ROULEAU A L'AUTRE

(30) Priority: 07.10.1996 GB 9620884
(43) Date of publication of application: 07.10.1998
(73) Proprietor: J. Ray McDermott S.A., New Orleans, LA 70112 (US)
(72) Inventor: TAYLOR, Leland, Harris, Jr., Aberdeen AB14 0LX (GB); JOHN, Joseph, London HA2 9UX (GB); SIMPSON, Nigel, Angus DD10 0RU (GB)
(74) Representative: Pilch, Adam John Michael
(86) International application number: GB9702736
(87) International publication number: WO9815763

(56) References cited:
- WO-A-94/06678
- GB-A- 2 163 827
- US-A- 4 117 692

## Description

### BACKGROUND OF THE INVENTION

### 1. Field of the Invention

The invention generally relates to the storage of pipe on a reel and more particularly but not exclusively to the reel to reel transfer of butt welded steel pipe, coiled tubing and large diameter tubing.

### 2. General Background

In offshore pipe laying operations, one method used for laying steel pipe on the ocean floor comprises welding sections of pipe together and reeling the pipe onto a large reel as the sections are welded together. This provides the advantage of eliminating the step of welding one section at a time to the pipe line as the pipe is being laid. This method of storing- and laying pipe has been used with pipe as large as thirty-six inches (915 mm) in diameter.

When laying pipe in such operations, it is not uncommon to have a situation where the total length of pipe to be laid exceeds the amount of pipe that can be stored on one reel. It then becomes necessary to have additional reeled pipe made available on the laying vessel in order to continue laying operations and finish the job.

One way that this may be done is by removing the empty reel from the laying vessel and then installing a second reel which is already loaded with pipe onto the laying vessel. Since large reels may weigh as much as one thousand five hundred metric tons, this may not always be practical, depending upon the vessel, sea conditions, and type of equipment available.

It has been proposed to provide a second reel already loaded with pipe on a separate vessel directly next to the laying vessel. The pipe would then be transferred from the second reel on the separate vessel to the reel on the laying vessel by a reel to reel transfer. This has been proposed in the context of re-reeling of small diameter coiled tubing, but reel-to-reel transfer of relative large diameter steel pipe in offshore pipe laying operations would involve significant problems. This is directly related to the fact that butt welded steel pipe will be subjected to much higher strains and the concentration of the strain effects around imperfections in the base material leaves a very short strain cycle life. As an example, traditional tubing can be re-reeled fifty or more times. However, for butt welded pipe, the strain life is somewhere between three to six cycles.

US Patent No. US-A-4 117 692 discloses a technique for laying pipeline on the sea bottom in which continuous pipeline is produced on land near a quay and then wound on to a floating pipeline storage reel. When sufficient pipeline has been wound on to the reel, the reel is towed out to sea to the pipelaying site where the floating reel is coupled to a pipelaying vessel. The pipeline is then unwound from the reel, straightened out and laid on the sea bed by means of a carrier arrangement on the vessel.

### SUMMARY OF THE INVENTION

According to one aspect of the invention there is provided a system for reel to reel transfer of pipe on to a vessel provided with an installation reel, the system comprising:
a storage reel for storing pipe to be transferred;
a pipe profile support means for providing a required pipe profile between the storage reel and the installation reel;
first means for monitoring the pipe slack on the storage reel, the first monitoring means comprising a first reel wrap sensor for sensing the wrap of the pipe on the storage reel;
second means for monitoring the pipe slack on the installation reel, the second monitoring means comprising a second reel wrap sensor for sensing the wrap of the pipe on the installation reel; and
a control system for controlling drive of the storage and installation reels in response to indications of pipe slack from the first and second monitoring means so as to minimize pipe slack between the storage and installation reels.

According to another aspect of the invention there is provided a method of reel to reel transfer of pipe on to a vessel provided with an installation reel, the method comprising:
providing a storage reel for storing pipe to be transferred;
positioning a pipe profile support means for providing a required pipe profile between the storage reel and the installation reel;
monitoring pipe slack on the storage reel by means of a first reel wrap sensor for sensing the wrap of the pipe on the storage reel;
monitoring pipe slack on the installation reel by means of a second reel wrap sensor for sensing the wrap of the pipe on the installation reel; and
controlling drive of the storage and installation reels in response to the pipe slack monitoring steps so as to minimize pipe slack between the storage and installation reels.

A preferred embodiment of the invention includes a shipping/storage reel, an installation reel, a pipe profile monitoring support, reel wrap sensors, a reel slack retarder, and a reel drive control system. The preferred system is capable of handling butt welded steel pipe or large diameter steel tubing, typically 4 to 16 inch (100 to 410 mm) in diameter. As used herein, the term "pipe" is intended to include coiled and other types of tubing. The shipping/storage reel is complete with a drive system and is either mounted on shore or mounted on a cargo barge or suitable self-propelled transport vessel. The installation reel is complete with a drive system and level wind system which is preferably mounted on a dynamically positioned vessel used to lay the pipe on the sea bed. A pipe profile monitoring system, reel wrap sensors, reel slack retarder, and reel drive control system are used to control the transfer speed and the tension in the transfer profile by governing the drive system on the shipping/storage reel and on the installation reel.

The advantages resulting from implementation of embodiments of the invention include:
(i) operational time of the installation vessel is reduced by loading pipe or tubing in a continuous length, eliminating delays due to welding constituent stalks during the reeling-on process;
(ii) set-up costs for the reeling of butt welded pipe are reduced since no storage facility is required apart from that for siting the storage reel; and
(iii) sailing time of the installation vessel is reduced by allowing loading to take place nearer to the installation site.

### BRIEF DESCRIPTION OF THE DRAWINGS

The invention will now be described by way of example with reference to the accompanying drawings, throughout which like parts are referred to by like references, and in which:
Figure 1 is a side schematic view of a system according to a preferred embodiment of the invention, including an installation vessel and a shore-based or floating pipe transfer system;
Figure 2 is a view similar to that of Figure 1, but schematically illustrating initiation of the reeling method;
Figures 3A and 3B are respectively front and side elevation views of a primary pivotable pipe retarder on the installation reel;
Figures 4A, 4B and 4C are respectively forward, side and plan elevation views of a secondary fixed pipe retarder on the installation reel and also on the storage reel;
Figures 5A and 5B are respectively front and side elevation views of a primary pivotable pipe retarder on the storage reel;
Figures 6A and 6B are respectively front and side elevation views of a pipe profile support structure;
Figure 7 is a schematic diagram of the operation of the control system;
Figure 8 is a view looking aft of the storage reel and retarder;
Figure 9 is a plan view of a system according to an embodiment of the invention;
Figures 10A and 10B are respectively side and front elevation views of the storage reel;
Figures 11A and 11B are respectively front and side views of the level wind assembly associated with the installation reel;
Figure 12 is a side view of a single forward drive for the installation reel;
Figure 13 is a side view of a double aft drive for the installation reel;
Figures 14A and 14B are respectively side and front elevation view of the installation reel stand arrangement;
Figures 15A and 15B are respectively front and side elevation views of an optional roller cradle support assembly;
Figure 16 is a general view of the storage reel drive;
Figure 17 shows the installation reel with details of initiating a pipe transfer operation;
Figure 18 shows the installation reel with details of termination of a pipe transfer operation; and
Figure 19 is a view similar to that of Figure 1, but showing principal dimensions of the system.

### DETAILED DESCRIPTION OF THE PREFERRED EMBODIMENT

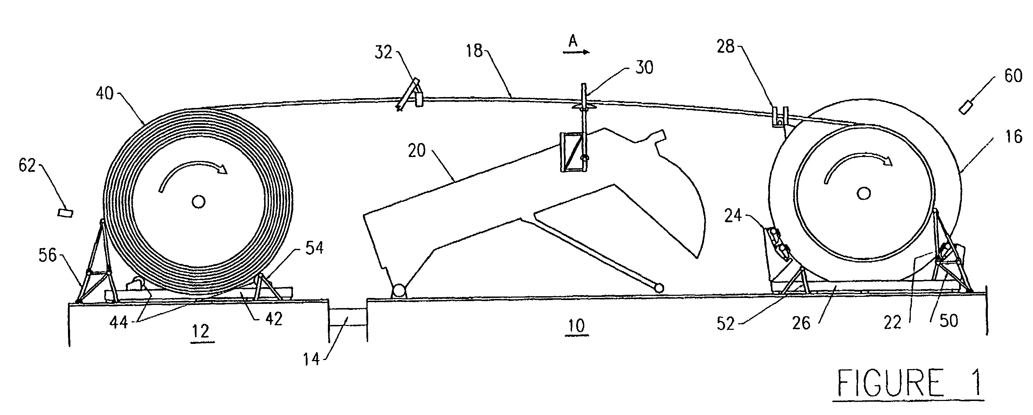

Referring initially to Figure 1, there is shown a pipelaying installation vessel 10 positioned adjacent a pipe transfer system 12, with a fender 14 separating the vessel 10 and the transfer system 12. The pipe transfer system 12 may be either shore-based, in which case the vessel 10 needs to be moored adjacent the system 12, or it may be installed on a floating platform such as a barge (which may be self-propelled or towable by another vessel).

The installation vessel 10 may be of the type having an installation reel 16 carrying a pipeline 18 typically made up of pipe sections which have previously been welded together. During pipelaying, the pipeline 18 is taken off the reel 16 and passes through a tower 20 which can be set to a desired pipelaying angle. The tower 20 includes pipe straightening and tensioning equipment (not shown) which may be of a type known in the art. The installation reel 16 is driven by a forward reel drive 22 and an aft reel drive 24 and is mounted on a reel stand 26. A level wind 28 is provided for controlling winding-on, and in some cases winding-off, of the pipeline 18.

Thus far, the vessel 10 has been described in a state unmodified for reel-to-reel transfer. For the purpose of embodying the invention, the vessel 10 is modified by the addition of a pipe profile support 30 which is releasably attached to the tower 20, in order to guide the pipeline 18. If required, a roller cradle support 32 may also be provided, for additional support of the pipeline 18. Figure 1 does not show any attachment for the roller cable support 32; this can be provided by a suitable mounting structure such as a crane, either on the transfer system 12 (whether land-based or barge-mounted) or on the vessel 10.

The pipe transfer system 12 includes a storage reel 40 mounted on a reel stand assembly 42 and driven by a reel drive 44. By driving both the reels 16 and 40 in a synchronized manner, the pipeline 18 may be transferred from the storage reel 40 to the installation reel 16 in the spooling direction A, via the pipe profile support 30 and (if provided) the roller cradle support 32. The installation reel 16 includes a primary pivotable pipe retarder 50 and a secondary fixed pipe retarder 52. The storage reel 40 includes a secondary fixed pipe retarder 54 and a primary pivotable pipe retarder 56. These retarders 50,52,54,56 are provided to prevent unreeling of the pipeline 18 from the respective reels in the event of loss of tension.

Cameras 60 and 62 are provided respectively for the reels 16 and 40 in order to monitor the states of pipeline spooling and unspooling.

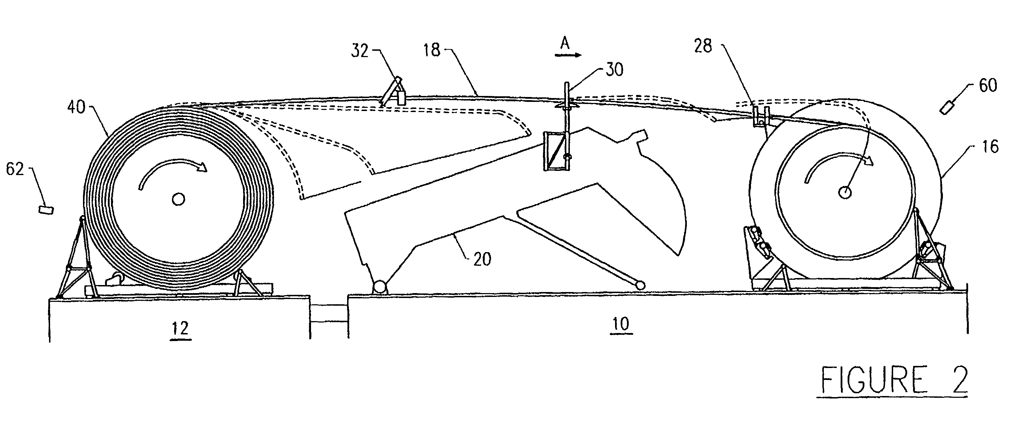

Figure 2 is a view similar to that of Figure but showing various stages of initiating a reel-to-reel transfer operation. These will be described in greater detail below.

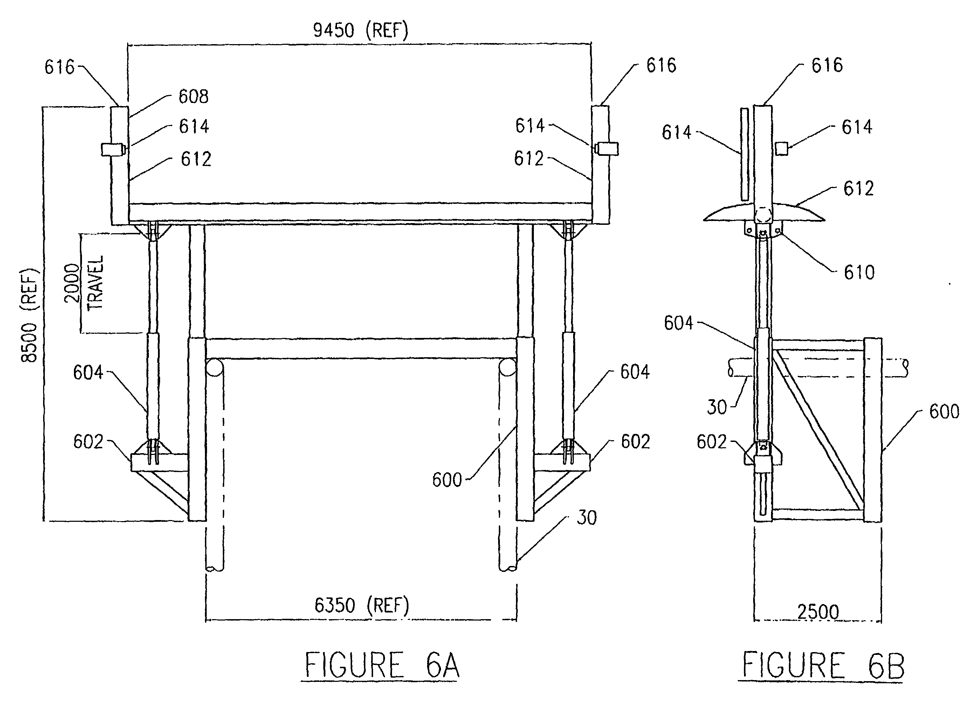

The pipe profile monitoring support 30, shown in Figures 6A and 6B, is a self-contained unit assembly comprising:-

A structural base frame 600 adaptable to mounting on any vessel or land based foundation, incorporating lower mountings 602 for raising actuating cylinders 604 and guides for a pipe profile support 608.

The profile support 608 is an assembly of components that travel vertically to monitor and support the pipe profile.

The actuating cylinders 604 (these could instead be screw jacks) are used to control the vertical displacement of the profile support 608 relative to the structural base frame 600. The hydraulic system can be set using a number of accumulators to apply constant pressure to the cylinders 604 and therefore a constant support force of the profile support 608 to the pipe. Control can be local or remote, manual or automatic. The cylinders 604 can be used to lower the support 608 below the pipeline 18 to allow unhindered passage of larger pipeline elements such as flanges, steps in the coating etc. over the top of the profile support 608.

Load pins 610 are used to measure the vertical downward force imposed by the pipe profile between the two reels 16,40 on to the profile support 608, this being more significant when the pipe is of a size whereby it is necessary to provide a support between the two reels 16,40. The read out of the load pins 610 can be displayed and recorded locally or remotely; additionally their output can be recorded and displayed in a number of formats for verification of strain history.

An anti-friction surface 612 is fitted to the upper horizontal and vertical inner surfaces of the profile 608 support to prevent damage to the pipeline 18.

A light curtain position monitor 614, mounted vertically either side of the pipe support 608 and protected by its vertical side frames 616, are used to monitor the vertical height of the pipeline 18 relative to the horizontal friction surface of the profile support 608; the read out of the light curtain position monitor 614 can be displayed and recorded locally or remotely; additionally its output can be recorded and displayed in a number of formats for verification of strain history. The total height of the light curtain position monitor 614 has been determined from analysis such that all likely vertical changes in pipe profile can be accommodated without change in set height.

Cameras 614 are fitted to the vertical side frames 616 of the pipe support 608 to monitor the vertical height of the pipeline 18 relative to the horizontal friction surface of the pipe support 608. The pictures from the cameras 614 can be displayed and recorded locally or remotely. Additionally their output can be recorded and displayed in a number of formats for verification of strain history.

The vertical side frames 616 mounted on the ends of the pipe support 608 constrain the pipe within the necessary fleeting width of the drums. Each side frame is fitted with a load-measuring device (not shown) to measure any side load imposed on the pipe should it travel across to the extremities of the pipe support 608 thereby giving warning to the operator.

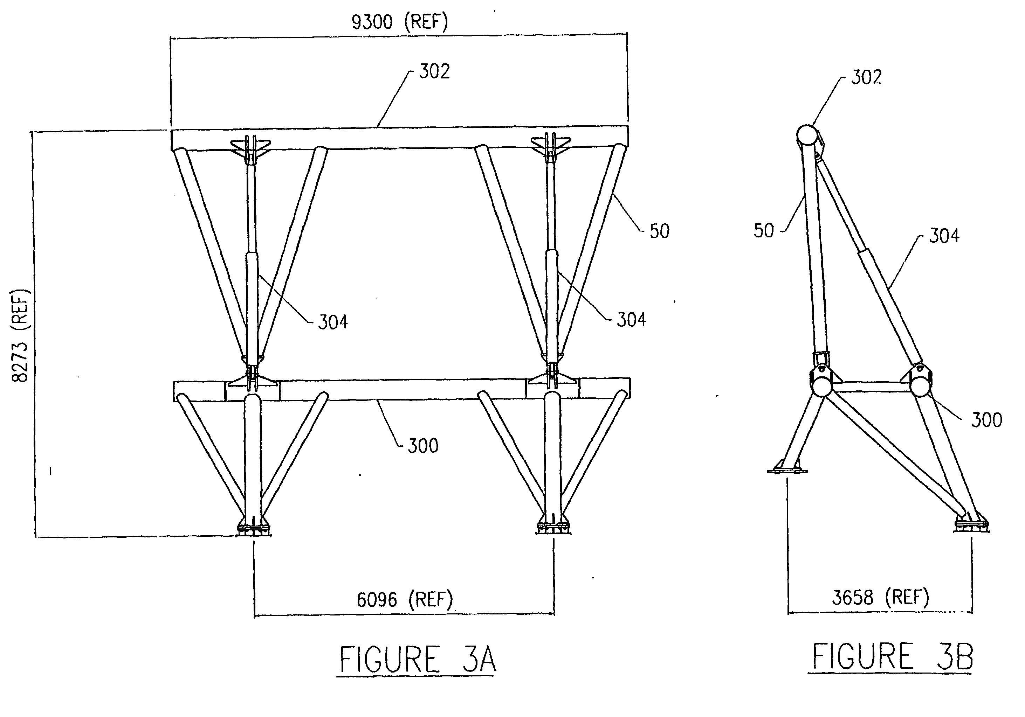

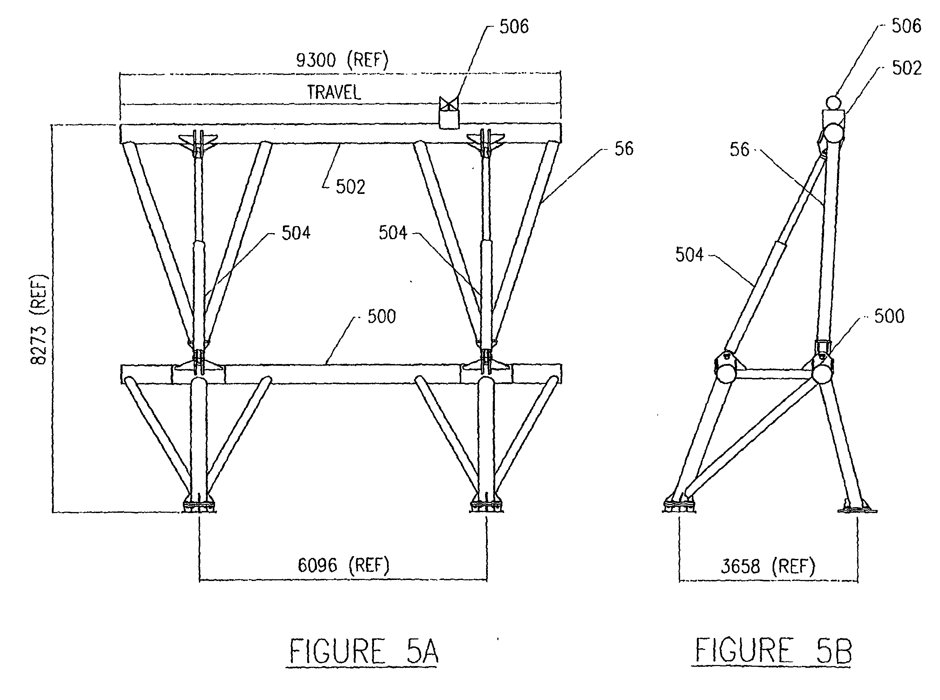

Reel wrap sensors (not shown) are mounted on each of the two movable pipe retarders 50,56 shown in Figures 3A,3B and 5A,5B. These sensors give the displacement of the retarder and thereby indicate to the operator the position of the pipe to the operator.

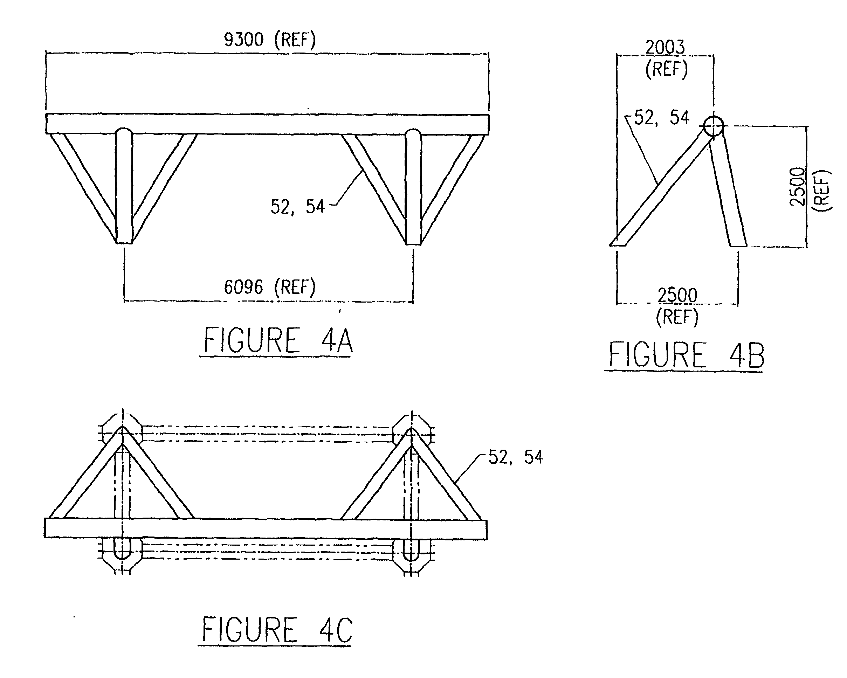

Reel slack retarders (Figures 3A to 5B) are comprised of four units, two for each reel, one being fixed and one pivotable for each pair. The fixed secondary retarders 52,54 are shown in Figures 4A, 4B, 4C. These units are fixed steel structures that are on the inboard side (relative to the reeling process) of both reels 16,40 and serve to retard the pipe in the event of loss of tension which could result in pipe unreeling. Their width is determined by the inside width of the reel flanges and their proximity to the reel governed by the reel flange outside diameter. In this way the maximum constraint is put on captivation of the pipe end without compromising reeling operations. These units are removable to allow the reel bases to be configured for vessel mounted, barge mounted or land based spooling operations.

The pivotable primary retarder 50 shown in Figures 3A and 3B (for the installation reel 16) is comprised of three elements:-

A base frame 300 mounted on to the reel base and vessel deck in a removable manner, the base frame 300 incorporating mountings for the following items.

A bumper frame 302 is pivotally mounted on the base frame 300. The bumper frame 302 is mounted on the out board side (relative to the reeling process) of the installation reel 16 and serves to retard the pipe in the event of loss of tension. Its width is just less than the inside width of the reel flanges and its proximity to the pipe governed by the reel core diameter at maximum travel and the necessary clearance from the reel flange diameter to allow the reel to be lifted out. The bumper frame 302 is moved in and out by hydraulic cylinders 304. Positioning of the bumper frame 302 can be achieved by automatic, local or remote control.

The cylinders 304 mounted on the base frame 300 and connected to the bumper frame 302 move the pivoting bumper frame 302 through its range of travel. Each cylinder 304 is fitted with displacement transducers (not shown) to allow the position of the bumper frame 302 and therefore the pipe wrap radius to be displayed at the control position.

The pivotable primary retarder 56 shown in Figures 5A and 5B (for the storage reel 40) is comprised of four elements:-

A base frame 500 mounted on to the reel base and barge deck or land base in a removable manner. The base frame 500 incorporates mountings for the following items.

A bumper frame 502 is pivotally mounted on the base frame 500. The bumper frame 502 is mounted on the out board side (relative to the reeling process) of the storage reel 40 and serves to retard the pipe in the event of loss of tension. Its width is just less than the inside width of the reel flanges and its proximity to the pipe governed by the reel core diameter at maximum travel and the necessary clearance from the reel flange diameter to allow the reel to be lifted out. The bumper frame 502 is moved in and out by hydraulic cylinders 504. Positioning of the bumper frame 502 can be achieved by automatic, local or remote control.

The cylinders 504 mounted on the base frame 500 and connected to the bumper frame 502 move the pivoting bumper frame 502 through its range of travel. Each cylinder 504 is fitted with displacement transducers (not shown) to allow the position of the bumper frame 502 and therefore pipe wrap radius to be displayed at the control position. The hydraulic system can be set using a number of accumulators to apply constant pressure to the cylinders 504 and therefore constant force of the bumper frame 502 to the pipe.

A pipe guide 506 is mounted on top of the bumper frame 502. It is used to maintain tight packing of the pipe against adjacent wraps. Where the pipe is running from one side of the storage reel 40 to the other side of the installation reel 16, the pipe guide 506 is further used to maintain correct packing.

Movement of the pipe guide 506 across the width of the bumper frame 502 is accomplished hydraulically by a rack and pinion drive (not shown). Positioning and speed of the pipe guide 506 can be achieved by automatic, local or remote control means.

Contact with the pipe is made by a diablo roller box within the pipe guide 506 whose orientation; number and size of rollers can be altered for particular pipe sizes. Orientation is further locally or remotely adjustable for the change in direction of spooling along the width of the reel.

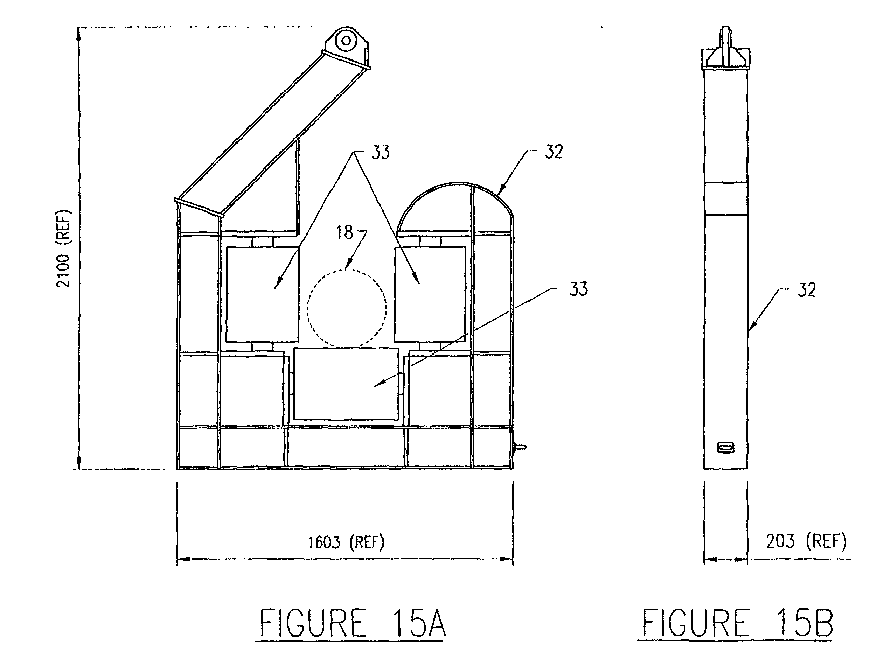

Figures 15A and 15B show the optional roller cradle support 32. This is an open sided three roller box (having rollers 33) which can be inserted between the storage reel 40 and the pipe profile support 30 to give additional support to pipes which are not rigid enough to support themselves over that distance. The roller cradle support 32 would normally be supported by a land based, barge mounted or vessel mounted crane. Its use would have been determined by pipe profile analysis carried out before the project started. Where necessary the roller cradle support 32 would also assist in achieving correct packing of the pipe as it moves from side to side of each reel during the spooling operation by lifting the pipe across the reel width. The crane would be fitted with a load monitor to ensure that an excessive point load would not be applied to the pipe at that position.

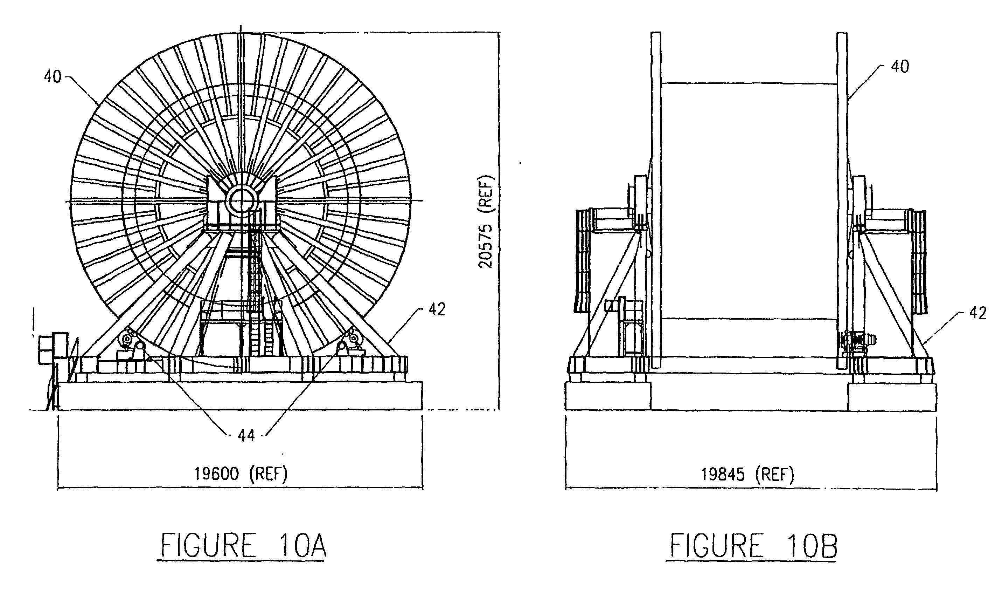

The shipping/storage reel 40, shown in Figures 10A and 10B, is a reel preferably identical to and therefore interchangeable with the installation reel 16, but can be any reel around which the subject pipe can be wound without exceeding acceptable strain levels. The reel 40 has the facility for lifting in and out of the drive stand 42 together with a means for engaging in the reel drive system 44. This means of engagement can be by external rim friction drive onto an underroller, external rim mounted chain or geared drive to the hub depending on reel size and construction. The reel 40, again depending on size and construction can be supported on the rim or central hub bearing. Reel capacities can vary from nominally 180Te to 3000Te.

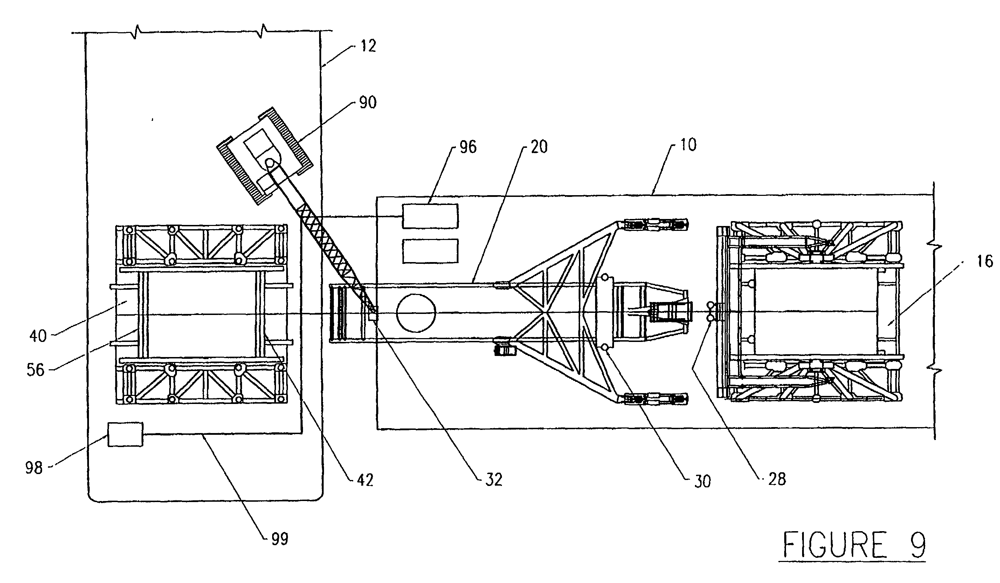

Figure 9 is a plan view of a typical installation. It will be seen that, in this case, a crane 90 mounted on the pipe transfer system 12 retains the roller cradle support 32. As previously mentioned, this could alternatively be retained by a support structure (such as a crane) on the vessel 10.

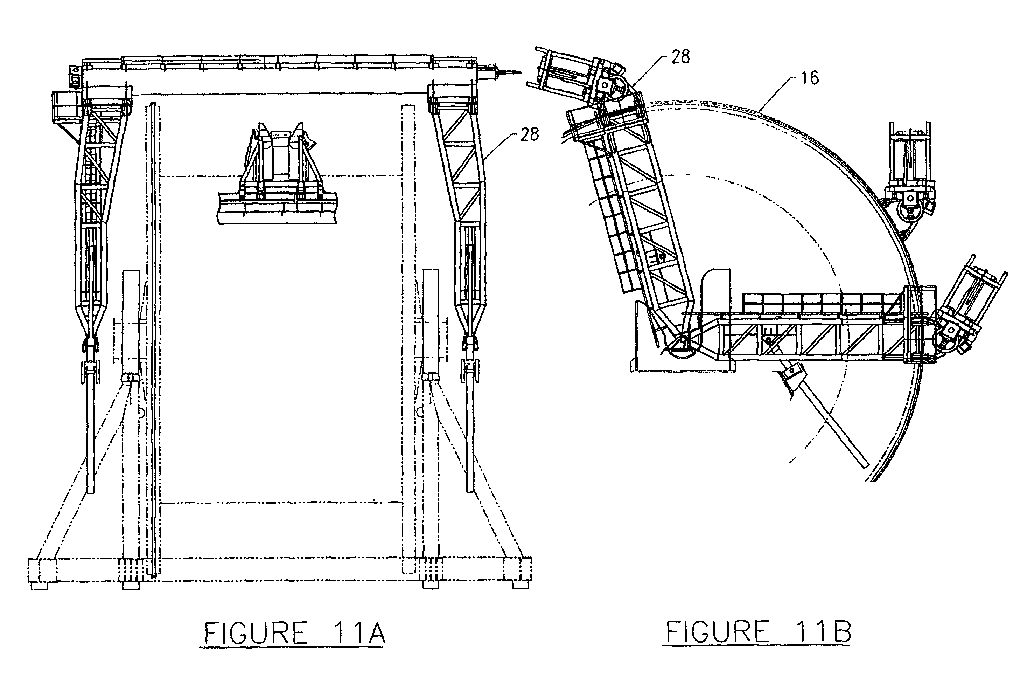

The level wind 28 is shown in Figures 11A and 11B. This may be used unmodified and, being an item known in the art, will not be further described.

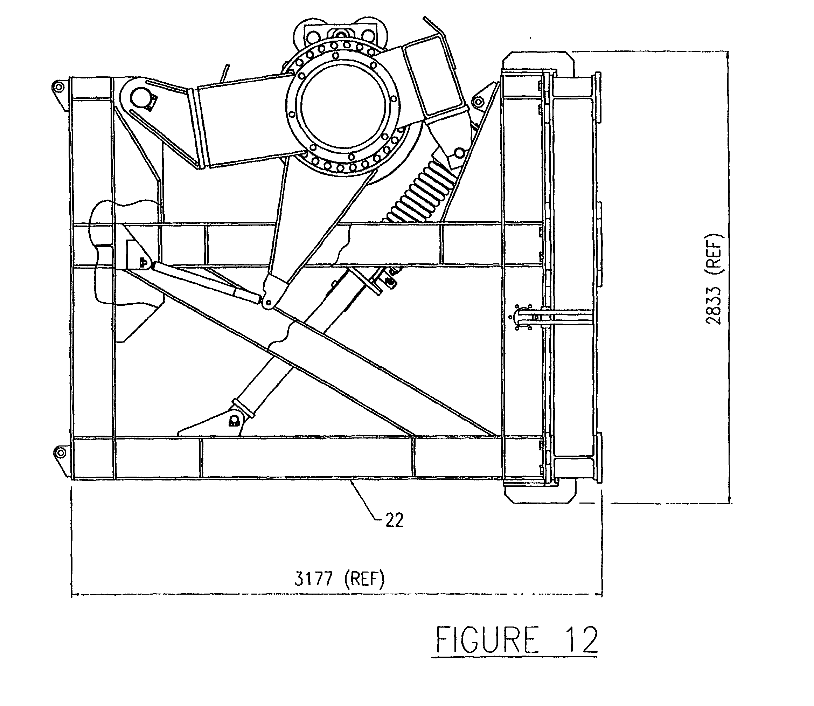

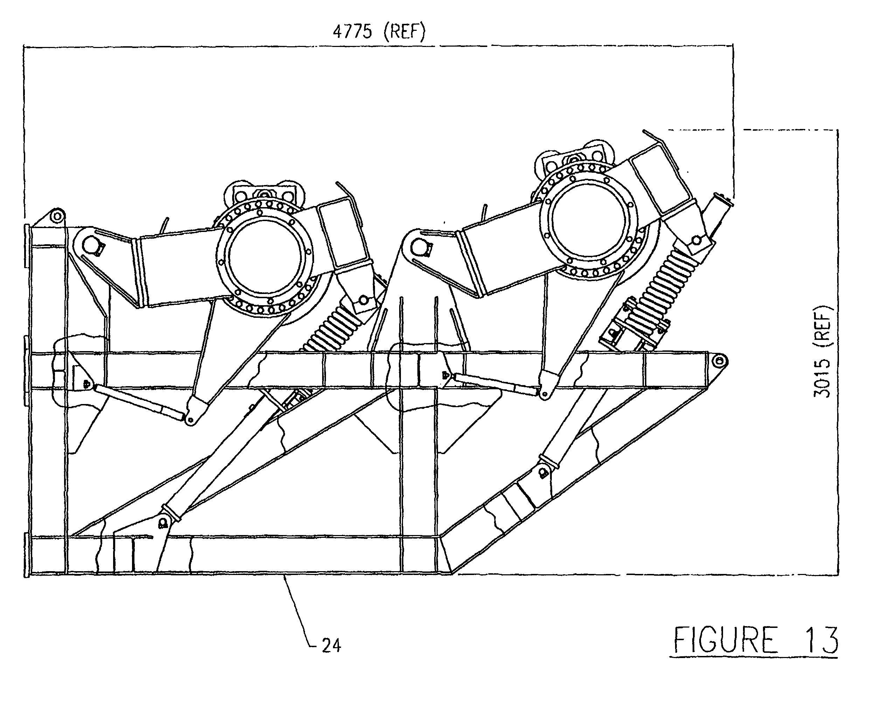

Figure 12 shows the forward drive (single) 22 for the installation reel 16 in more detail, and Figure 13 shows the aft drive (double) 24 in more detail.

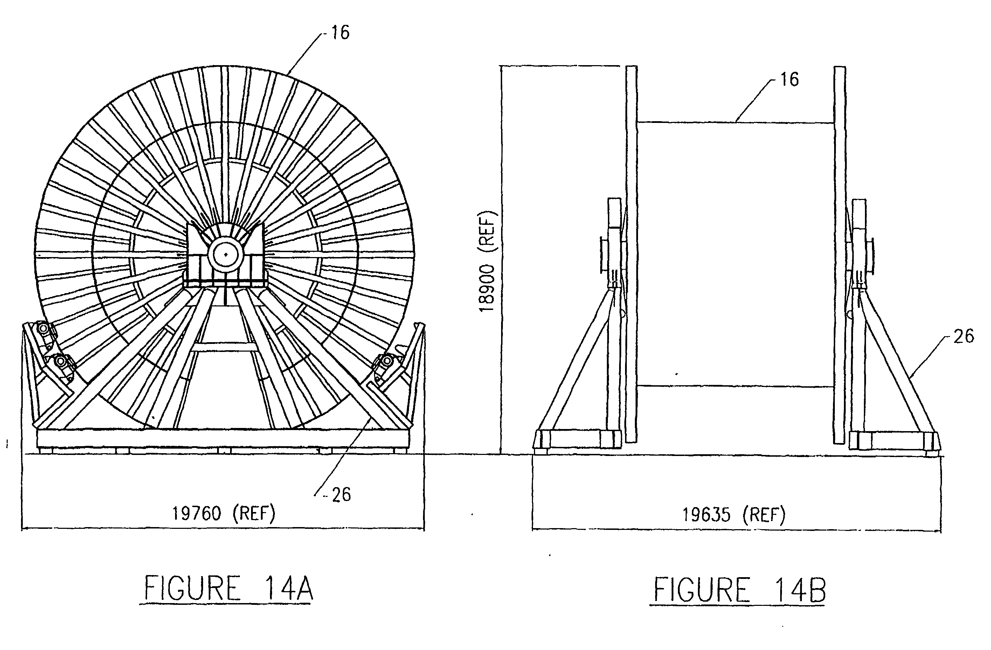

Figure 14 shows further details of the installation reel stand 26.

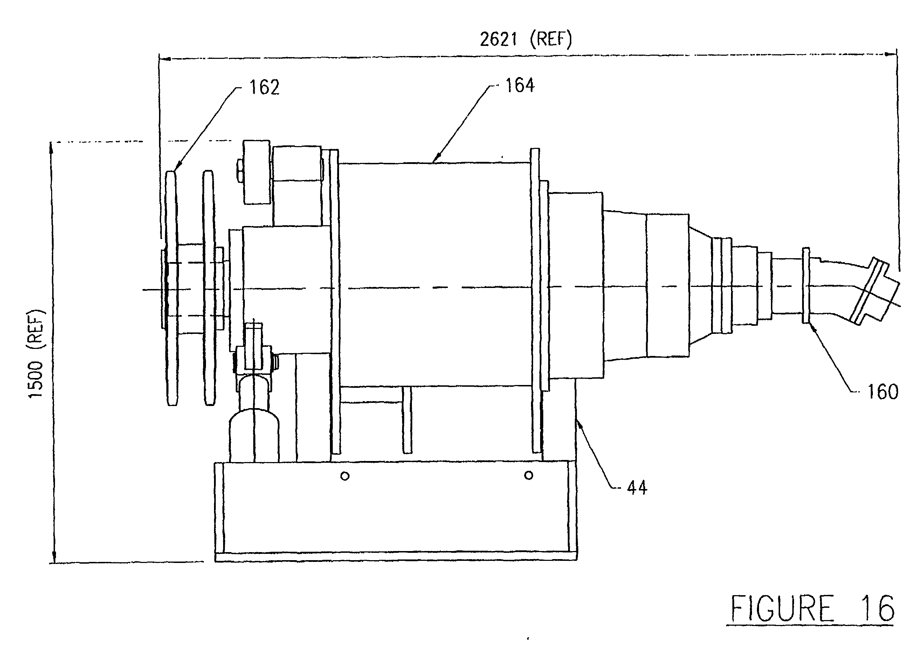

Figure 16 shows a drive system which can be used as the reel drive 44 for the storage reel 40. The system includes a hydraulic motor 160 which drives a pulley 162 via a gearbox 164. The pulley 162 can act on the storage reel 40 in any of several different ways, as set out above, such as by external rim friction drive onto an underroller, external rim mounted chain or geared drive to the hub.

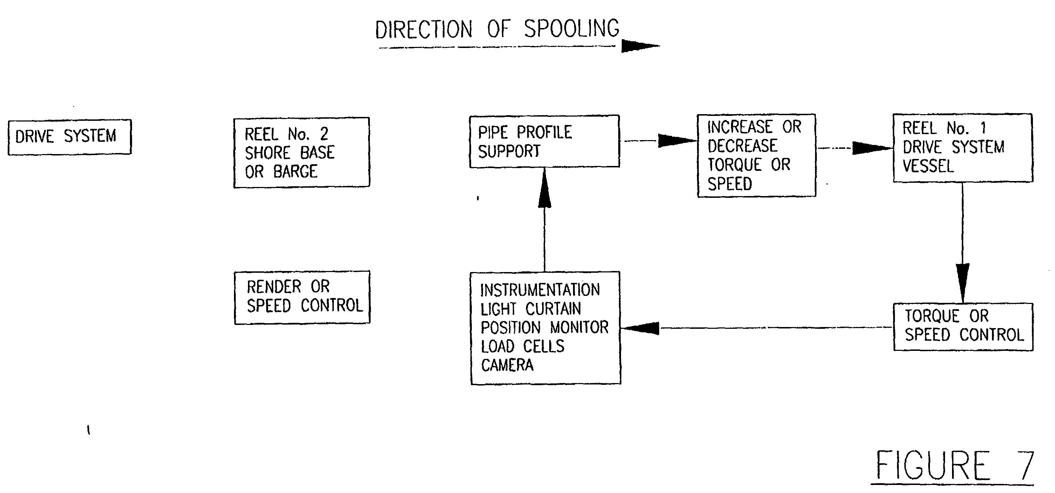

The control system allows the operator(s) to select a number of operating scenarios from "manual" to "fully automatic" with a range of maintenance modes in-between, in accordance with the control scheme set out in Figure 7.

Given below are the controllable elements with their associated sensors, "Reel 1" referring to the installation reel 16 and "Reel 2" referring to the storage reel 40:-

| **Element** | **Motion** | **Adjustment** | **Sensor** | **Output** |
|---|---|---|---|---|
| (vi) **Reel 1** | | | | |
| Forward Retarder | In/out | | Displacement transducer | Pipe wrap |
| Levelwind | Port/Stbd | Manual/ automatic | Load cell | Fleeting load + max min alarms |
| Reel Drive | Reel In/Out | Manual/ Automatic Torque | Torque arm | Drive torque/Pipe tension + max min alarms |
| | Reel In/Out | Manual/ Automatic Speed | Potentiometer | Reel speed + max min alarms |
| | N/A | Info fed to operator | Camera | Visual aid |
| Pipe Profile Support | Up/Down | Manual/ Automatic Vertical | Load pins | Pipe support load + max min alarms |
| | N/A | Info fed to reel drives | Light Curtain Position Monitor | Pipe vertical position in mm. + max min alarms |
| | N/A | Info fed to operator | Cameras | Pipe vertical position - visual |
| | N/A | Info fed to operator | Load pins | Side fleeting load |
| Roller Cradle Support (where used) | Up/Down | Manual Vertical And Horizontal Position | Vertical load | Pipe support load |

| **Reel 2** | | | | |
|---|---|---|---|---|
| Aft Retarder | In/out | Manual/ Automatic Position | Displacement transducer | Pipe wrap + max min alarms |
| | | Manual/ Automatic Force | Pressure transducer | Force on pipe + max min alarms |
| Pipe Guide | Port/Stbd | Manual/ Automatic Speed | Load cell | Fleeting load + max min alarms |
| Reel Drive | Reel In/Out | Manual/ Automatic Torque | Torque arm | Drive torque/Pipe tension + max min alarms |
| | Reel In/Out | Manual/ Automatic Speed | Potentiometer | Reel speed + max min alarms |
| | N/A | Info fed to operator | Camera | Visual aid |

### Operational Control Stations

| **Control Station** | **Personnel** | **Duty** |
|---|---|---|
| Fully Automatic | | |
| Deck | Shift Superintendent | Overall command of start and stop of operations. |
| | Riggers | Winch operations |
| MCC | Supervisor | Monitoring of operation of equipment. Monitoring of all instrumentation and cameras. Initiation of corrective actions for out of tolerance events. Communications with all stations. |
| | Operator 1 | Initiation of automatic control of:-Reel drive 1 Pipe profile support Level wind Reel 1 forward retarder |
| | Operator 2 | Initiation of automatic control of:-Reel drive 2 Reel 2 aft retarder and pipe guide Data logging |
| Transport/Storage Reel 2 | Operator 3 | Manual control intervention (if reqd) on:-Reel drive 2 Reel 2 aft retarder and pipe guide |
| Crane operator (if required) | Operator 4 | Roller cradle support |

| **Semi-Automatic** | | |
|---|---|---|
| Deck | Shift Superintendent | Overall command of start and stop of operations. |
| | Riggers | Winch operations |
| MCC | Supervisor | Monitoring of operation of equipment. Monitoring of all instrumentation and cameras. Initiation of corrective actions for out of tolerance events. Communications with all stations. |
| | Operator 1 | Initiation of automatic control of:-Reel drive 1 Pipe profile support Level wind Reel 1 forward retarder |
| | Operator 2 | Data logging |
| Transport/Storage Reel 2 | Operator 3 | Manual control of:-Reel drive 2 Reel 2 aft retarder and pipe guide |
| Crane operator (if required) | Operator 4 | Roller cradle support |

| **Manual** | | |
|---|---|---|
| Deck | Shift Superintendent | Overall command of start and stop of operations. |
| | Riggers | Winch operations |
| MCC | Supervisor | Monitoring of operation of equipment. Monitoring of all instrumentation and cameras. Initiation of corrective actions for out of tolerance events. Communications with all stations. |
| | Operator 1 | Manual control of:- Reel drive 1 Pipe profile support Level wind Reel 1 forward retarder |
| | Operator 2 | Data logging |
| Transport/Storage Reel 2 | Operator 3 | Manual control of:- Reel drive 2 Reel 2 aft retarder and pipe guide |
| Crane operator (if required) | Operator 4 | Roller cradle support |

### Operational Methods

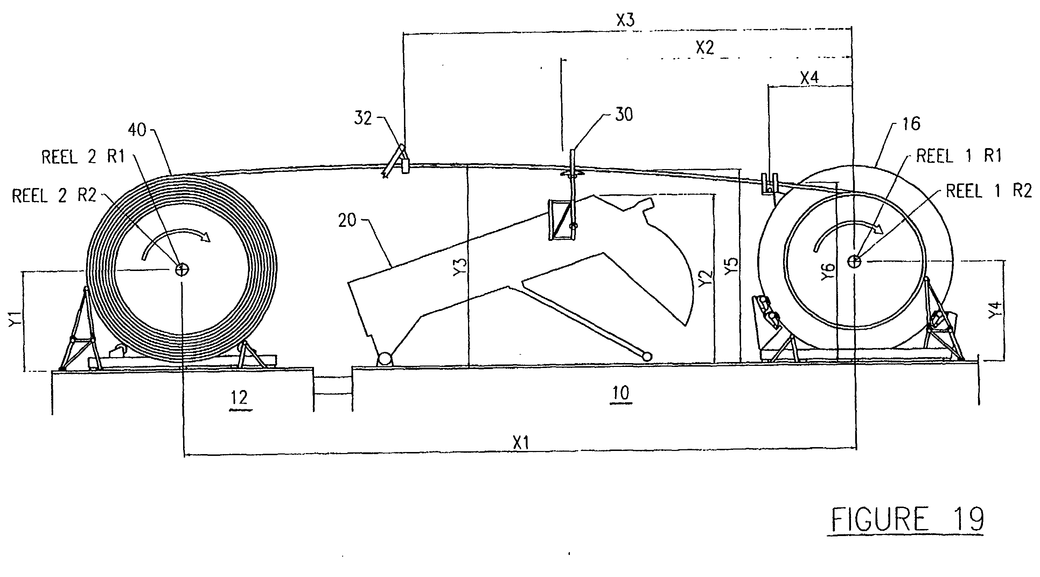

Where stated as "predetermined", equipment settings will have been arrived at by pre-installation analysis taking into account specific pipe properties. This analysis will among pipe profile limiting parameters determine the optimum "X" and "Y" co-ordinates of the pipeline 18 in Figure 19.

The main control centre for operations is the Master Control Centre (MCC) 96 on the installation vessel 10, this typically being positioned near the stern of the vessel 10 as shown in Figure 9.

The MCC houses displays from:-
Reel 1 camera 60;
Reel 2 camera 62;
Pipe profile support cameras 614;
Deck camera (not shown);
Light curtain position monitor 614;
Pipe profile support load cells (not shown);
Reel 1 drive :- speed, direction and torque;
Reel 1 wrap sensor on primary retarder;
Reel 2 drive :- speed, direction and torque (where connected)
Reel 2 wrap sensor on primary retarder (where connected)
Reel 2 pipe guide side load load cells (where connected)

### Initiation of Reeling (common to all methods)

During initiation of reeling, the installation reel 16 is driven from a control station 98 on the barge or land base reacting to instructions from the MCC 96, typically via a hard wire control linkage 99.

The primary retarder 56 on the storage reel 40 will have been engaged, with a pre-determined pressure, with the pipe subsequent to the initial spooling operation and the pipe guide set in the appropriate orientation for the direction of spooling.

The pipe profile support 30 and the level wind 28 will be in the lowered position, as shown in Figure 2, in order to provide minimum hindrance to the initiation operation.

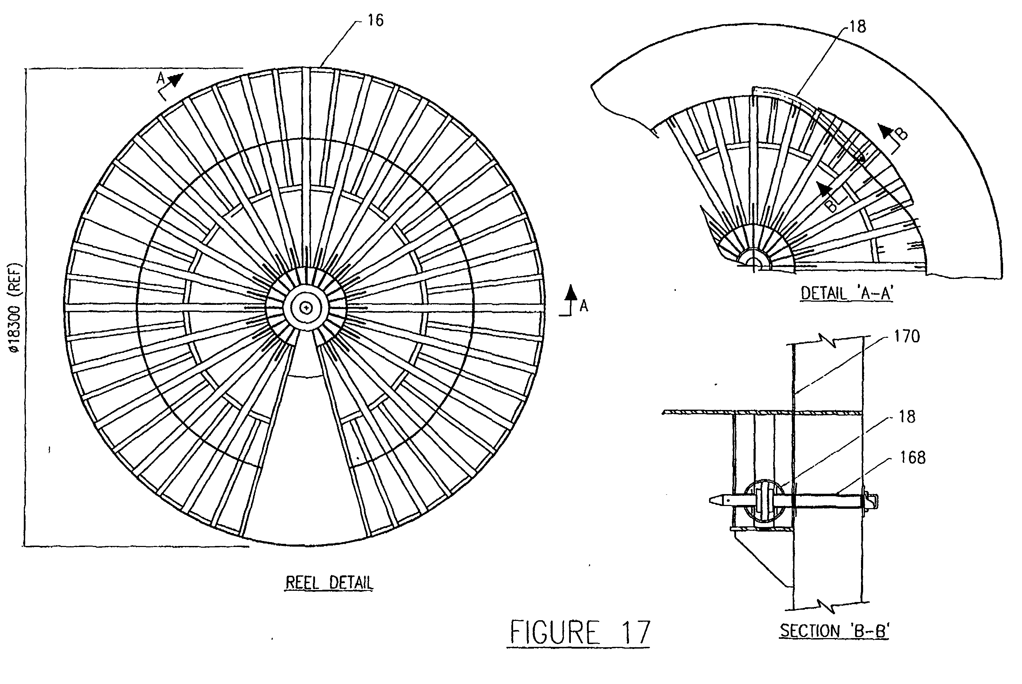

A winch wire is passed from a winch outboard (relative to the reeling process) of the installation reel 16 through a tie in a slot on the reel 16 to the straight end of pipe anchored on the storage reel 40. Tension is taken up on the winch and the tie down rigging on the pipe is released. The retarder 56 on the storage reel 40 is inserted close to the outer wrap of the pipe and thereby indicates the wrap diameter of the reel 40 to the operator on the lay vessel. The operator on the storage reel 40 is instructed to pay out at the same time as the operator on the winch by the installation reel 16 hauls in; as the control of the winch is faster to react to than the reel, its operator is instructed to vary speed to maintain the pipe profile of the pipe as it travels between the two reels. Depending on the rigidity of the pipeline 18, as determined from pre-installation analysis, the roller cradle support 32 may be deployed at the appropriate support distance. Once the pipe end termination has passed over the pipe profile support 30 it is raised up in close proximity to the desired position for reeling operations, this function being activated from the MCC with indication of the desired position having been reached being given from the cameras 60,62 and the light curtain position monitor 614. The level wind 28 is then raised up to engage the pipe between the side rollers of its roller box and provide further vertical support if necessary. The level wind 28 then pushes the pipe sideways to ensure that it runs parallel to the reel flange to ensure correct alignment with the reel pipe engagement slot. As shown in Figure 17, once the end of the pipe 18 is in place and the end pinned 168 into the side wall 170 of the reel 16, the winch wire is released. The primary retarder 50 is moved in towards the first wrap diameter of the pipe. The storage reel 40 is put into drive mode at a predetermined speed setting, say 300 m/hr. Operations then continue on as follows:-

### 1 Fully Automatic

In this mode there is a hard wired control link 99 from the installation vessel 10 to the control position or station 98 adjacent to the storage reel 40. This linkage covers control of the storage reel drive, primary retarder, pipe guide and cameras viewing pipe profile to the outboard side (relative to the reeling operation).

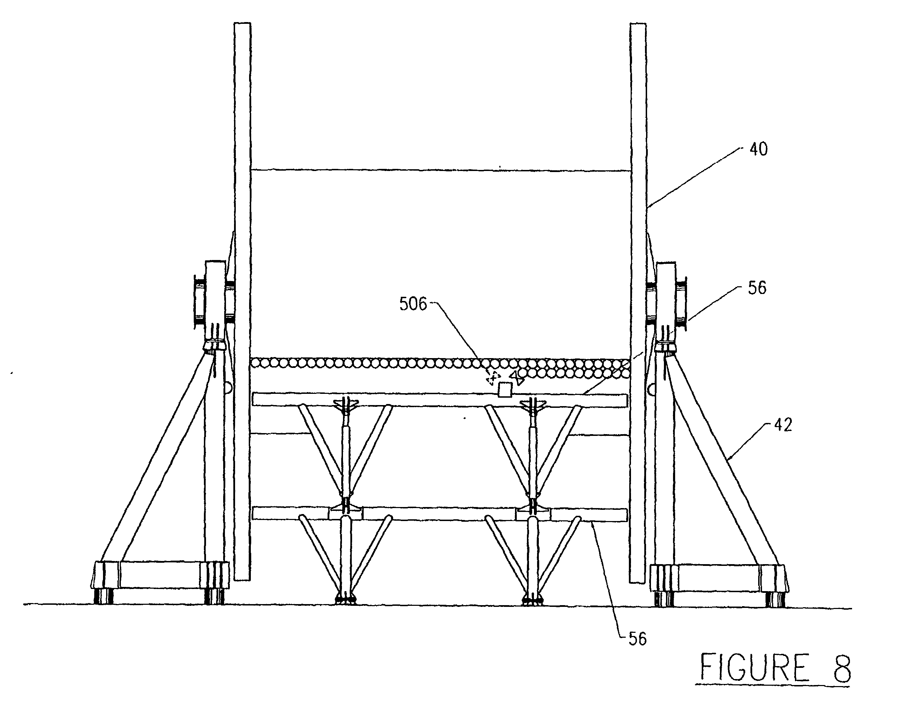

The primary retarder 56 on the reel 40 is put in automatic pipe following mode, whereby it applies via the pipe guide 506 a constant load perpendicular to the axis of the reel and along the axis of the reel to the pipe to maintain correct packing, as shown in Figure 8. Force perpendicular to the axis of the reel is maintained by hydraulic accumulators set to a predetermined value and forces along the axis of the reel are maintained by the setting of the chain drive of the pipe guide to relieve at a predetermined torque equating to the desired force.

The installation reel 16 is set into drive simultaneously with the storage reel 40 at say 310 m/hr to reel on the pipe from the storage reel 40.

As the pipe profile develops into a steady profile i.e. after the first wrap on the reel 16, the pipe profile support 30 is raised further to the predetermined height setting and the pipe profile monitored about a nominal height using the light curtain position monitor 614 and the camera system. Deviation above the nominal height band indicates a tension lower than that required to achieve a proper wrap around the reel 16 and therefore output from the light curtain position monitor 614 signals the drive system of the reel 16 to speed up incrementally until an in-tolerance condition is reached again. Deviation below the nominal height band indicates a tension higher than that required to achieve a proper wrap around the reel 16 and therefore output from the light curtain position monitor 614 signals the drive system of the reel 16 to slow down incrementally until an in-tolerance condition is reached again.

Once the pipe reaches the end of the wrap on the storage reel 40 and therefore changes direction of travel across the reel, the storage reel operator, in co-ordination with the MCC control, changes the orientation of the diablo roller box on the pipe guide 506 to achieve most effective control of the pipe packing at the transition. Once that a successful change in direction is achieved the pipe guide 506 returns to automatic following mode.

The reeling operation can be slowed at the conclusion of each wrap to enable correct packing of the pipe to be ensured.

The speed setting of the storage reel 40 generally remains at constant setting throughout the reeling operation.

Where the pipe is not self supporting between the two reels 16,40, the pipe profile support 30 can be brought into contact with the underside of the pipe. The contact load is registered on the load cells of the pipe profile support 30 and displayed in the MCC. Loads generated on the pipe profile support 30 by the pipe as a result of tension between the two reels 16,40 are predetermined in an allowable band. Excess or reduced tension in the pipeline between the reels and therefore possible excess point loads or buckling on or of the pipe may be minimized by using the accumulator system on the profile support cylinders 604, thereby allowing the profile support 30 to rise and fall automatically with minimal change in load. The installation reel 16 is accelerated or slowed down automatically as a result of an out of tolerance indication above or below this band. In addition to the above when the roller cradle support 32 is used, the crane driver adjusts its height to maintain a minimal predetermined support force on the pipe. Changes in height due to excess load would always be agreed with the control position in the MCC prior to action being taken.

During all phases of the operation, manual intervention can be taken to override the automatic control system to correct inconsistencies in pipe wrapping, passage mid-line flanges, end terminations etc. Alarm signals from the side load cells on the pipe profile support 30 and/or the level wind 28 generated by excess fleeting loads would be reacted to manually.

### 2 Semi-Automatic

The semi-automatic mode is largely as the fully automatic mode except that there is no control linkage between the MCC on the installation vessel 10 and the storage/transport reel 40. All functions on the storage reel 40 are carried out at a manual control station for reel drive 44, primary pipe retarder 56 in/out and pipe guide 506.

The primary pipe retarder 56 in/out and pipe guide 506 can be set to operate automatically, in response to the un-reeling of the pipe, or manually as a response to local conditions/ instruction from the MCC, from this position.

All instructions on speed and direction may be given by radio from the MCC.

The primary pipe retarder 50, installation reel drive 22,24 and level wind 28 would be put in automatic mode responding to signals from the light curtain position monitor 614 or pipe profile support load cells.

### 3 Manual

The manual mode is operationally, in terms of reeling the pipe, similar to the fully automatic mode except that there is no control linkage between the MCC on the installation vessel 10 and the storage/transport reel 40.

All speed, direction and load functions on the storage reel 40 are carried out at a manual control station for reel drive 44, primary pipe retarder 56 in/out and pipe guide 506.

All speed, direction and load functions on the installation reel 16 on the installation vessel 10 are carried out individually using the manual controls in the MCC for reel drive 22,24, primary pipe retarder 50 in/out, levelwind 28 and pipe profile support 30.

All instructions on speed and direction may be given by radio from the MCC to all control stations and are determined by response to visual information available to the operators at all stations.

### Completion of reeling (common to all methods)

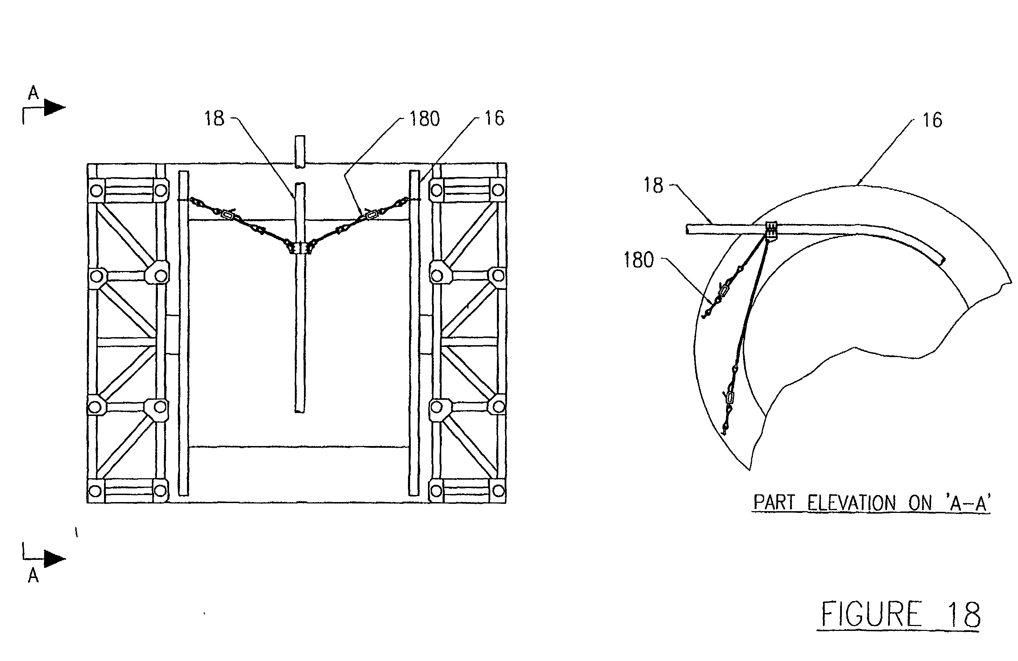

Once the installation reel 16 is filled with the correct amount of pipe, it is restrained to the installation reel 16 by a tie-back arrangement 180 as in Figure 18 with (typically) some 18 m protruding from the reel 16. The pipe remaining on the storage reel 40 and bridging the gap between the reels is known as the lead string and is used only for the initiation process. The lead string is some 150m long and is generally constructed from a lesser grade of pipe than the installation pipe as it will not be required to be installed on the seabed.

The lead string from the storage reel 40 is restrained by a winch mounted on the installation vessel 10. The pipe is then cut. The operator of the storage reel 40 actuates the drive system to haul in the lead string back onto-the storage reel 40 for later disposal or reuse depending on its accumulated strain history. Back tension on the lead string is provided by the tugger winch mounted on the deck of the installation vessel 10.

The installation pipe protruding from the installation reel 16 is then engaged in the lay system particular to the installation vessel 10 concerned.

The invention as embodied in the arrangements previously described will therefore be seen to comprise a shipping/storage reel, an installation reel, a pipe profile monitoring support, reel wrap sensors, a reel slack retarder, and a reel drive control system.

The shipping/storage reel is complete with a drive system and is either mounted on shore or mounted on a cargo barge or suitable self propelled transport vessel.

The installation reel is complete with a drive system and level wind system which is preferably mounted on a dynamically positioned vessel used to lay the pipe on the sea bed.

The pipe profile monitoring system is mounted at predetermined distances from the installation reel to monitor the plastic and elastic deformation that occurs during the transfer process. This system is used to monitor the strain history of the pipe during transfer and to insure that the strain is kept within engineered levels so as not to render the pipe product unserviceable.

Reel wrap sensors are mounted on both reels. These sensors track the wraps of the pipe as they are fed on to and off the reels.

A reel slack retarder is mounted on one or both reels to keep pipe slack within acceptable levels. For example, too little slack will place excess strain on the pipe while too much slack will result in the pipe having a tendency to uncoil and not correctly wrap around the reel.

In the fully automatic mode, the reel drive control system is used to control the transfer speed and the tension in the transfer profile by governing the drive system on the shipping/storage reel, which renders the pipe, and on the installation reel, which provides the motive force to pull the pipe or tubing from one reel to the other. The reel drive control system responds to the signals from the pipe profile monitoring support, the reel wrap sensors, and the reel slack retarder based on control parameters determined from the reeling transfer analysis, which assumes certain relative positions of the two reels.

In other levels of automation, the reel drive control systems can be independent, and acceptable pipe profiles verified by the visual and electronic sensors available. Alteration to individual drives may then be made in response to this information.

The reel drive control system may be set up so as to be governed by the sensor readings, which will allow different levels of automation for the transfer process. The level of automation possible will depend upon the sensitivity of the particular pipe involved. For example, at a minimum, the system may be adjusted such that an alarm is activated if certain sensor readings are out of a predetermined range to notify the operator that adjustments are required. This would eliminate a subjective aspect of the process where the operator makes adjustments strictly according to subjective visual observations of the operations. Automated data recording may be used to provide input to strain history calculations.

## Claims

1. A system for reel to reel transfer of pipe on to a vessel (10) provided with an installation reel (16), the system comprising:
a storage reel (40) for storing pipe (18) to be transferred;
a pipe profile support means (30) for providing a required pipe profile between the storage reel (40) and the installation reel (16);
first means for monitoring the pipe slack on the storage reel (40), the first monitoring means comprising a first reel wrap sensor (56) for sensing the wrap of the pipe on the storage reel (40);
second means for monitoring the pipe slack on the installation reel (16), the second monitoring means comprising a second reel wrap sensor (50) for sensing the wrap of the pipe on the installation reel (16); and
a control system for controlling drive of the storage and installation reels (40,16) in response to indications of pipe slack from the first and second monitoring means so as to minimize pipe slack between the storage and installation reels (40,16).

2. A system according to claim 1, wherein the pipe profile support means (30) includes means (614) for monitoring the height of the pipe (18).

3. A system according to claim 2, wherein the means for monitoring the height of the pipe comprises a light curtain position monitor (614).

4. A system according to claim 1, claim 2 or claim 3, wherein the pipe profile support means (30) includes a profile support member (608) which is vertically adjustable to monitor and support the pipe profile.

5. A system according to claim 4, wherein the profile support member (608) is adjustable by means of actuating cylinders (604).

6. A system according to any one of the preceding claims, wherein the pipe profile support means (30) is mounted on the vessel (10).

7. A system according to claim 6, wherein the vessel (10) is provided with an adjustable tower (20) for pipe laying, and wherein the pipe profile support means (30) is attached to the adjustable tower (20).

8. A system according to any one of the preceding claims, wherein said first and second reel wrap sensors each comprise a pivotable pipe retarder (56,50).

9. A system according to claim 8, wherein each pivotable pipe retarder (56,50) is operable to minimize loss of pipe tension thereby preventing pipe unreeling.

10. A system according to claim 8 or claim 9, comprising a fixed pipe retarder (54, 52) associated with each reel (40,16) on the opposite side of the reel to the pivotable pipe retarder (56,50).

11. A system according to any one of the preceding claims, wherein the first and second means for monitoring the pipe slack respectively include first and second cameras (62,60).

12. A system according to claim 2, or any one of the preceding claims when dependent on claim 2, wherein the control system is responsive to the means (614) for monitoring the pipe height, as well as to the first and second monitoring means.

13. A system according to any one of claims 1 to 12, wherein the system is mounted on a floating platform.

14. A system according to claim 13, wherein the system is mounted on a barge.

15. A system according to any one of claims 1 to 12, wherein the system is land based.

16. A system according to any one of the preceding claims, comprising a roller cradle support means (32) for providing additional support to the pipe (18) between the storage reel (40) and the pipe profile support means (30).

17. A system according to claim 16, wherein the roller cradle support means (32) is mounted on the transfer system (12).

18. A system according to claim 16, wherein the roller cradle support means (32) is mounted on the vessel (10).

19. A method of reel to reel transfer of pipe on to a vessel (10) provided with an installation reel (16), the method comprising:
providing a storage reel (40) for storing pipe (18) to be transferred;
positioning a pipe profile support means (30) for providing a required pipe profile between the storage reel (40) and the installation reel (16);
monitoring pipe slack on the storage reel (40) by means of a first reel wrap sensor (56) for sensing the wrap of.the pipe on the storage reel (40);
monitoring pipe slack on the installation reel (16) by means of a second reel wrap sensor (50) for sensing the wrap of the pipe on the installation reel (16); and
controlling drive of the storage and installation reels (40,16) in response to the pipe slack monitoring steps so as to minimize pipe slack between the storage and installation reels (40,16).

20. A method according to claim 19, wherein control of the storage and installation reel drives is also responsive to monitoring of the pipe height at the pipe profile support means (30).

21. A method according to claim 19 or claim 20, including the step of initiating operation by loading pipe (18) from the storage reel (40) to the installation reel (16) by means of a winch wire, the pipe profile support means (30) being in a lowered position.

22. A method according to claim 19, claim 20 or claim 21, including the step of completing operation by restraining pipe (18) on the installation reel (16), restraining pipe (18) on the storage reel (40), cutting the pipe (18), and hauling in the remaining cut pipe back on to the storage reel (40).

23. A method according to any one of claims 19 to 22, wherein first and second cameras (62,60) are used in the pipe slack monitoring steps.

## Patentansprüche

1. Anlage für das Überführen von Rohr von Spule zu Spule auf einem Schiff (10), die mit einer Installationsspule (16) versehen ist, wobei die Anlage aufweist:
eine Vorratsspule (40) zum Speichern von zu überführendem Rohr (18);
ein Rohrprofilstützmittel (30) zum Vorsehen eines erforderlichen Rohrprofils zwischen der Vorratsspule (30) und der Installationsspule (16);
erste Mittel zur Überwachung des Rohrdurchhanges auf der Vorratsspule (40), wobei das erste Überwachungsmittel einen ersten Spulenwickelsensor (56) aufweist für das Abfühlen des Abwickelns des Rohres auf der Vorratsspule (40);
zweite Mittel zum Überwachen des Rohrdurchhanges auf der Installationsspule (16), wobei das zweite Überwachungsmittel einen zweiten Spulenwickelsensor (50) aufweist zum Abfühlen des Abwickelns des Rohres auf der Installationsspule (16); und
ein Steuersystem zum Steuern des Antriebes der Vorrats- und Installationsspulen (40, 60) in Abhängigkeit von Anzeigen des Rohrdurchhanges von dem ersten und dem zweiten Überwachungsmittel, um den Rohrdurchhang zwischen der Vorratsspule und der Installationsspule (40, 60) minimal zu machen.

2. Anlage nach Anspruch 1, wobei das Rohrprofilstützmittel (30) Mittel (614) aufweist für das Überwachen der Höhe des Rohres (18).

3. Anlage nach Anspruch 2, wobei das Mittel zum Überwachen der Höhe des Rohres einen Positionsmonitor (614) mit einem Lichtvorhang aufweist.

4. Anlage nach Anspruch 1, Anspruch 2 oder Anspruch 3, wobei das Rohrprofilstützmittel (30) ein Profilstützteil (608) aufweist, welches vertikal einstellbar ist, um das Rohrprofil zu überwachen und zu stützen.

5. Anlage nach Anspruch 4, wobei das Profilstützteil (608) mittels Betätigungszylindern (604) einstellbar ist.

6. Anlage nach einem der vorhergehenden Ansprüche, wobei das Rohrprofilstützmittel (30) auf dem Schiff (10) montiert ist.

7. Anlage nach Anspruch 6, wobei das Schiff (10) mit einem einstellbaren Mast (20) für das Rohrverlegen versehen ist und wobei das Rohrprofilstützmittel (30) an dem einstellbaren Mast (20) angebracht ist.

8. Anlage nach einem der vorhergehenden Ansprüche, wobei der erste und zweite Spulenwikkelsensor jeweils einen schwenkbaren Rohrverzögerer (56, 50) aufweist..

9. Anlage nach Anspruch 8, wobei jeder schwenkbare Rohrverzögerer (56, 50) betrieblich in der Lage ist, Verlust an Rohrspannung minimal zu machen, wodurch ein Abwickeln des Rohres verhindert wird.

10. Anlage nach Anspruch 8 oder Anspruch 9, mit einem festen Rohrverzögerer (54, 52), welcher jeder Spule (40, 16) auf der dem schwenkbaren Rohrverzögerer (56, 50) gegenüberliegenden Seite der Spule zugeordnet ist.

11. Anlagen nach einem der vorhergehenden Ansprüche, wobei das erste bzw. zweite Mittel zum Überwachen des Rohrdurchhanges erste und zweite Kameras (62, 60) aufweist.

12. Anlage nach Anspruch 2 oder einem der vorhergehenden Ansprüche, wenn sie von Anspruch 2 abhängen, wobei das Steuersystem von Mitteln (614) für die Überwachung der Rohrhöhe sowie von dem ersten und zweiten Überwachungsmittel abhängig ist.

13. Anlage nach einem der Ansprüche 1 bis 12, wobei die Anlage auf einer schwimmenden Plattform montiert ist.

14. Anlage nach Anspruch 13, wobei das System auf einer Barge montiert ist.

15. Anlage nach einem der Ansprüche 1 bis 12, wobei die Anlage landgestützt ist.

16. Anlage nach einem der vorhergehenden Ansprüche mit einem Rollenträger-Stützmittel (32) für die Schaffung einer zusätzlichen Stütze für das Rohr (18) zwischen der Vorratsspule (40) und dem Rohrprofilstützmittel (30).

17. Anlage nach Anspruch 16, wobei das Rollenträger-Stützmittel (32) auf der Überführungsanlage (12) montiert ist.

18. Anlage nach Anspruch 16, wobei das Rollenträger-Stützmittel (32) auf dem Schiff (10) montiert ist.

19. Verfahren zum Überführen von Rohr von Spule zu Spule auf einem Schiff (10), welches mit einer Installationsspule (16) versehen ist, wobei das Verfahren aufweist:
Vorsehen einer Vorratsspule (40) zum Speichern von zu überführendem Rohr (18);
Anordnen eines Rohrprofilstützmittels (30) für das Vorsehen eines erforderlichen Rohrprofils zwischen der Vorratsspule (40) und der Installationsspule (16);
Überwachen des Rohrdurchhanges auf der Vorratsspule (40) mittels eines ersten Spulenwickelsensors (56) zum Abfühlen des Wickelns des Rohres auf der Vorratsspule (40);
Überwachen des Rohrdurchhanges auf der Installationsspule (16) mittels eines zweiten Spulenwickelsensors (50) zum Abfühlen der Rohrwickel auf der Installationsspule (16); und
Steuern des Antriebes der Speicher- und Installationsspule (40, 16) in Abhängigkeit von den Rohrdurchhangs-Überwachungsschritten, um den Rohrdurchhang zwischen der Vorrats- und der Installationsspule (40, 16) minimal zu machen.

20. Verfahren nach Anspruch 19, wobei die Steuerung der Antriebe für die Vorrats- und Installationsspule auch auf die Überwachung der Rohrhöhe an dem Rohrprofilstützmittel (30) anspricht.

21. Verfahren nach Anspruch 19 oder Anspruch 20 mit dem Beginnen des Betriebes durch Beladen des Rohres (18) von der Vorratsspule (40) zu der Installationsspule (16) mittels einer Seilwinde, wobei sich das Rohrprofilstützmittel (30) in einer abgesenkten Position befindet.

22. Verfahren nach Anspruch 19, Anspruch 20 oder Anspruch 21, mit dem Beenden des Betriebes durch Zurückhalten von Rohr (18) auf der Installationsspule (16), Zurückhalten von Rohr (18) auf der Vorratsspule (40), Schneiden des Rohres (18) und Einholen des verbleibenden, geschnittenen Rohres zurück auf die Vorratsspule (40).

23. Verfahren nach einem der Ansprüche 19 bis 22, wobei erste und zweite Kameras (62, 60) bei der Rohrdurchhangüberwachung benutzt werden.

## Revendications

1. Système pour transférer d'une bobine à une autre un conduit jusque sur un navire (10) pourvu d'une bobine (16) de mise en place, le système comportant :
une bobine (40) de stockage destinée à stocker un conduit (18) devant être transféré ;
un moyen de support (30) pour profil de conduit destiné à établir un profil de conduit demandé entre la bobine de stockage (40) et la bobine de mise en place (16) ;
un premier moyen destiné à contrôler le mou du conduit sur la bobine de stockage (40), le premier moyen de contrôle comportant un premier capteur (56) d'enroulement sur la bobine destiné à détecter l'enroulement du conduit sur la bobine de stockage (40) ;
un second moyen destiné à contrôler le mou du conduit sur la bobine de mise en place (16), le second moyen de contrôle comportant un second capteur (50) d'enroulement sur la bobine destiné à détecter l'enroulement du conduit sur la bobine (16) de mise en place ; et
un système de commande destiné à commander l'entraînement des bobines (40, 16) de stockage et de mise en place en réponse à des indications de mou du conduit provenant des premier et second moyens de contrôle afin de minimiser le mou du conduit entre les bobines (40, 16) de stockage et de mise en place.

2. Système selon la revendication 1, dans lequel le moyen (30) de support pour le profil du conduit comprend un moyen (614) destiné à contrôler la hauteur du conduit (18).

3. Système selon la revendication 2, dans lequel le moyen destiné à contrôler la hauteur du conduit comporte un élément (614) de contrôle de position à rideau de lumière.

4. Système selon la revendication 1, la revendication 2 ou la revendication 3, dans lequel le moyen (30) de support pour le profil du conduit comprend un élément (608) de support de profil qui est réglable verticalement pour contrôler et supporter le profil du conduit.

5. Système selon la revendication 4, dans lequel l'élément de support de profil (608) peut être réglé au moyen de cylindres d'actionnement (604).

6. Système selon l'une quelconque des revendications précédentes, dans lequel le moyen (30) de support pour le profil du conduit est monté sur le navire (10).

7. Système selon la revendication 6, dans lequel le navire (10) est pourvu d'une tour réglable (20) pour la pose du conduit, et dans lequel le moyen (30) de support pour le profil du conduit est relié à la tour réglable (20).

8. Système selon l'une quelconque des revendications précédentes, dans lequel lesdits premier et second capteurs d'enroulement sur bobine comprennent chacun un ralentisseur pivotant (56, 50) de conduit.

9. Système selon la revendication 8, dans lequel chaque ralentisseur pivotant (56, 50) de conduit peut être mis en oeuvre pour minimiser la perte de tension du conduit afin d'empêcher un déroulage du conduit.

10. Système selon la revendication 8 ou la revendication 9, comportant un ralentisseur fixe (54, 52) de conduit associé à chaque bobine (40, 16) sur le côté opposé de la bobine par rapport au ralentisseur pivotant (56, 50) de conduit.

11. Système selon l'une quelconque des revendications précédentes, dans lequel les premier et second moyens pour contrôler le mou du conduit comprennent respectivement des première et seconde caméras (62, 60).

12. Système selon la revendication 2, ou l'une quelconque des revendications précédentes lorsqu'elle dépend de la revendication 2, dans lequel le système de commande réagit au moyen (614) pour contrôler la hauteur du conduit, ainsi qu'aux premier et second moyens de contrôle.

13. Système selon l'une quelconque des revendications 1 à 12, dans lequel le système est monté sur une plate-forme flottante.

14. Système selon la revendication 13, dans lequel le système est monté sur une barge.

15. Système selon l'une quelconque des revendications 1 à 12, dans lequel le système est basé à terre.

16. Système selon l'une quelconque des revendications précédentes, comportant un moyen (32) de support de berceau à rouleaux destiné à procurer un support supplémentaire au conduit (18) entre la bobine de stockage (40) et le moyen (30) de support pour le profil du conduit.

17. Système selon la revendication 16, dans lequel le moyen (32) de support de berceau à rouleaux est monté sur le système de transfert (12).

18. Système selon la revendication 16, dans lequel le moyen (32) de support de berceau à rouleaux est monté sur le navire (10).

19. Procédé pour transférer d'une bobine à une autre un conduit jusque sur un navire (10) pourvu d'une bobine (16) de mise en place, le procédé comprenant :
l'utilisation d'une bobine de stockage (40) destinée à stocker un conduit (10) devant être transféré ;
le positionnement d'un moyen (30) de support pour le profil du conduit destiné à établir un profil de conduit demandé entre la bobine de stockage (40) et la bobine de mise en place (16) ;
Le contrôle du mou du conduit sur la bobine de stockage (40) au moyen d'un premier capteur (56) d'enroulement sur bobine destiné à détecter l'enroulement du conduit sur la bobine de stockage (40) ;
le contrôle du mou du conduit sur la bobine de mise en place (16) au moyen d'un second capteur (50) d'enroulement sur bobine destiné à détecter l'enroulement du conduit sur la bobine de mise en place (16) ; et
la commande de l'entraînement des bobines (40, 16) de stockage et de mise en place en réponse aux étapes de contrôle du mou du conduit afin de minimiser le mou du conduit entre les bobines (40, 16) de stockage et de mise en place.

20. Procédé selon la revendication 19, dans lequel la commande des entraînements des bobines de stockage et de mise en place réagit également à un contrôle de la hauteur du conduit au niveau du moyen (30) de support pour le profil du conduit.

21. Procédé selon la revendication 19 ou la revendication 20, comprenant les étapes d'une opération d'amorçage en chargeant le conduit (18) depuis la bobine de stockage (40) jusque sur la bobine de mise en place (16) au moyen d'un câble de treuil, le moyen (30) de support pour le profil du conduit étant dans une position abaissée.

22. Procédé selon la revendication 19, la revendication 20 ou la revendication 21, comprenant l'étape d'une opération d'achèvement en retenant le conduit (18) sur la bobine de mise en place (16), retenant le conduit (18) sur la bobine de stockage (40), coupant le conduit (18) et ramenant en arrière par traction jusque sur la bobine de stockage (40) le conduit coupé restant.

23. Procédé selon l'une quelconque des revendications 19 à 22, dans lequel des première et seconde caméras (62, 60) sont utilisées dans les étapes de contrôle du mou du conduit.
